# EUROPEAN PATENT APPLICATION

(11) **EP 4 614 651 A1**
(43) Date of publication of application: **10.09.2025**
(21) Application number: 23901015.0
(22) Date of filing: 30.11.2023
(51) Int. Cl.: H01M 10/0567, H01M 10/0569, H01M 4/131

(54) **LITHIUM SECONDARY BATTERY**

(30) Priority: 09.12.2022 KR 20220171809
(71) Applicant: LG Energy Solution, Ltd., Seoul 07335 (KR)
(72) Inventor: HAN, Jung Gu, Daejeon 34122 (KR); LEE, Chul Haeng, Daejeon 34122 (KR); KIM, Yo Jin, Daejeon 34122 (KR); LEE, Jung Min, Daejeon 34122 (KR); JI, Su Hyeon, Daejeon 34122 (KR); YEOM, Chul Eun, Daejeon 34122 (KR); SUNG, Ki Won, Daejeon 34122 (KR); JO, Young Seong, Daejeon 34122 (KR); KIM, Jeong Min, Daejeon 34122 (KR)
(74) Representative: Hoffmann Eitle
(86) International application number: PCT/KR2023/019620
(87) International publication number: WO 2024/122996

(57) **Abstract**

The present invention relates to a lithium secondary battery including a positive electrode, a negative electrode, a separator disposed between the positive electrode and the negative electrode, and a non-aqueous electrolyte, wherein the positive electrode includes an overlithiated manganese-rich oxide containing Mn in an amount of 50 mol% or greater with respect to all metals excluding lithium and having a lithium-to-transition metal molar ratio of greater than **1,** the non-aqueous electrolyte includes a lithium salt, an organic solvent, and an additive, the additive includes a first additive and a second additive, and the first additive and the second additive each include a compound represented by a specific formula.

## Description

### TECHNICALFIELD

### CROSS-REFERENCE TO RELATED APPLICATIONS

This application claims priority from Korean Patent Application No. 10-2022-0171809 filed on December 9, 2022, the disclosure of which is incorporated herein by reference.

### TECHNICAL FIELD

The present disclosure relates to a lithium secondary battery.

### Description of the Related Art

Lately, there has been a rapid expansion in the application of lithium secondary batteries to power storage supply of large-area devices such as automobiles and power storage devices, as well as power supply of electronic devices such as electrical, electronic, communication, and computer devices, resulting in a rising demand for high-capacity, high-output, and high-stability secondary batteries.

The lithium secondary batteries generally include a positive electrode containing a positive electrode active material, a negative electrode containing a negative electrode active material, an electrolyte serving as a medium for delivering lithium ions, and a separator. In this case, as the negative electrode active material, a carbon-based active material, a silicon-based active material, orthe like may be used. In addition, as the positive electrode active material, a lithium transition metal oxide such as lithium cobalt oxide (LiCoO₂), lithium nickel oxide (LiNiO₂), and lithium nickel-cobalt-manganese composite oxide may be used.

Lately, overlithiated manganese-rich oxide is considered to be the preferred choice for next-generation positive electrode active materials. The overlithiated manganese-rich oxide is formed to have a higher amount of relatively affordable and abundant manganese (Mn), and thus is provided with benefits of high capacity. However, in the process of formation and charge/discharge, reactive oxygen generated by phase transformation of the positive electrode active material causes greater decomposition of the electrolyte, a significant increase in the amount of gas generation, and electrodeposition of a transition metal eluted from the positive electrode active material onto the negative electrode to destroy an SEI film of the negative electrode, resulting in the limited use of the overlithiated manganese-rich oxide. This issue is particularly troublesome at high-temperature and high-voltage driving.

### DISCLOSURE OF THE INVENTION

### TECHNICAL PROBLEM

An aspect of the present invention provides, in a lithium secondary battery containing an overlithiated manganese-rich oxide as a positive electrode active material, a lithium secondary battery having excellent high-temperature cycle characteristics and high-temperature storage characteristics by reducing gas generation during initial activation and charging/discharging, and preventing the elution of transition metals from a positive electrode active material.

### TECHNICAL SOLUTION

According to an aspect of the present invention, there is provided a lithium secondary battery including a positive electrode, a negative electrode, a separator disposed between the positive electrode and the negative electrode, and a non-aqueous electrolyte, wherein the positive electrode includes an overlithiated manganese-rich oxide containing Mn in an amount of 50 mol% or greater with respect to all metals excluding lithium and having a lithium-to-transition metal molar ratio of greater than 1, the non-aqueous electrolyte includes a lithium salt, an organic solvent, and an additive, the additive includes a first additive and a second additive, the first additive includes a compound represented by Formula 1 below, and the second additive includes a compound represented by Formula 2 below.

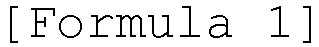

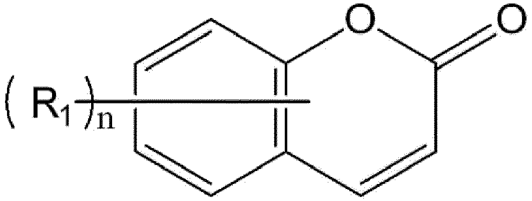

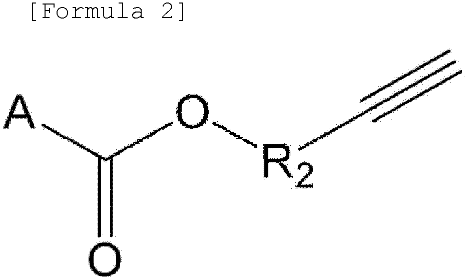

In Formula 1 above, R₁ each independently includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof and n is an integer of 0 to 6, and in Formula 2 above, A is a substituted or unsubstituted heteroaryl group having 3 to 5 carbon atoms and R₂ is an alkylene group having 1 to 3 carbon atoms.

### ADVANTAGEOUS EFFECTS

A lithium secondary battery of the present disclosure uses an overlithiated manganese-rich oxide as a positive electrode active material, and uses a first additive and a second additive each having a specific formula structure as an additive of a non-aqueous electrolyte. The first additive is a coumarin-based compound that scavenges reactive oxygen upon initial activation to prevent consumption of an organic solvent in the non-aqueous electrolyte and prevent gas generation resulting from decomposition of the organic solvent. In addition, the second additive is a compound containing a heteroaromatic ring and may remove HF generated from decomposition of lithium salts, and may thus prevent manganese from being eluted by HF from the positive electrode active material and prevent reactive oxygen loss to significantly reduce gas generation. Accordingly, when the first additive and the second additive are used together, in the lithium secondary battery containing overlithiated manganese-rich oxide, gas generation upon initial activation and charging/discharging is reduced, and the elution of transition metals from the positive electrode active material is suppressed, and thus the lithium secondary battery may have significantly improved high-temperature cycle characteristics and high-temperature storage characteristics.

### MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

It will be further understood that the terms "include," "comprise," or "have" used herein, specify the presence of stated features, numbers, steps, elements, or combinations thereof, but do not preclude the presence or addition of one or more other features, numbers, steps, elements, or combinations thereof.

Meanwhile, prior to describing the present disclosure, unless otherwise specified in the present disclosure, "*" indicates a portion connected between ends of the same or different atoms or formulas.

In addition, as used herein, "a" and "b" in the description of "a to b carbon atoms" indicate the number of carbon atoms included in a specific functional group. That is, the functional group may include "a" to "b" carbon atoms. For example, the term "alkyl group having 1 to 5 carbon atoms" indicates an alkyl group including 1 to 5 carbon atoms, that is, CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, or the like.

In addition, as used herein, an alkyl group, an alkenyl, an alkynyl, an alkoxy, an aryl or a heteroaryl group may be substituted or unsubstituted. Unless otherwise defined, the term "substituted" indicates that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, or the like.

Hereinafter, the present invention will be described in more detail.

### Lithium secondary battery

The present disclosure relates to a lithium secondary battery.

The lithium secondary battery according to the present disclosure includes a positive electrode, a negative electrode, a separator disposed between the positive electrode and the negative electrode, and a non-aqueous electrolyte, wherein the positive electrode includes overlithiated manganese-rich oxide containing Mn in an amount of 50 mol% or greater with respect to all metals excluding lithium, and having a lithium-to-transition metal molar ratio of greater than 1, the non-aqueous electrolyte includes a lithium salt, an organic solvent, and an additive, the additive includes a first additive and a second additive, the first additive includes a compound represented by Formula 1 below, and the second additive includes a compound represented by Formula 2 below.

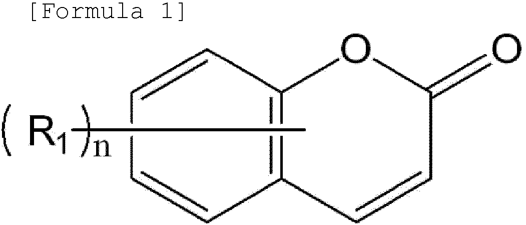

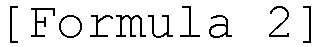

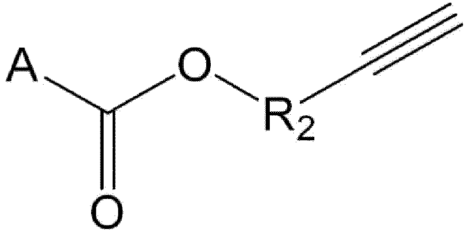

In Formula 1 above, R₁ each independently includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof and n is an integer of 0 to 6, and in Formula 2 above, A is a substituted or unsubstituted heteroaryl group having 3 to 5 carbon atoms and R₂ is an alkylene group having 1 to 3 carbon atoms.

A lithium secondary battery of the present disclosure uses an overlithiated manganese-rich oxide as a positive electrode active material, and uses a first additive and a second additive each having a specific formula structure as an additive of a non-aqueous electrolyte. The first additive is a coumarin-based compound that scavenges reactive oxygen upon initial activation to prevent consumption of an organic solvent in the non-aqueous electrolyte and prevent gas generation resulting from decomposition of the organic solvent. In addition, the second additive is a compound containing a heteroaromatic ring and may remove HF generated from decomposition of lithium salts, and may thus prevent manganese from being eluted by HF from the positive electrode active material and prevent reactive oxygen loss to significantly reduce gas generation. Accordingly, when the first additive and the second additive are used together, in the lithium secondary battery containing overlithiated manganese-rich oxide, gas generation upon initial activation and charging/discharging is reduced, and the elution of transition metals from the positive electrode active material is suppressed, and thus the lithium secondary battery may have significantly improved high-temperature cycle characteristics and high-temperature storage characteristics.

The lithium secondary battery includes a negative electrode, a positive electrode, a separator, and a non-aqueous electrolyte. Specifically, the lithium secondary battery includes a negative electrode, a positive electrode facing the negative electrode, a separator interposed between the negative electrode and the positive electrode, and a non-aqueous electrolyte. The lithium secondary battery may be prepared by inserting an electrode assembly including the negative electrode, the positive electrode facing the negative electrode, the separator interposed between the negative electrode and the positive electrode into a battery case, and then injecting a non-aqueous electrolyte.

### (1) Positive electrode

The positive electrode includes a positive electrode active material.

The positive electrode active material includes overlithiated manganese-rich oxide. The overlithiated manganese-rich oxide may include Mn in an amount of 50 mol% or greater with respect to all metals excluding lithium, and have a lithium-to-transition metal molar ratio of greater than 1.

The overlithiated manganese-rich oxide is highlighted as a next-generation high-capacity positive electrode active material, but is of limited used due to a specific structural deterioration thereof. Specifically, reactive oxygen released from the overlithiated manganese-rich oxide during initial activation decomposes and consumes an organic solvent (e.g., ethylene carbonate) included in a non-aqueous electrolyte, and thus generate gas by-products to cause reduced lifespan performance, increased resistance, and reduced safety. In addition, during the process of charging/discharging a lithium secondary battery containing the overlithiated manganese-rich oxide, HF, which is a decomposition product of lithium salt, elutes manganese from the overlithiated manganese-rich oxide, and accordingly, oxygen, specifically reactive oxygen, is released from the overlithiated manganese-rich oxide in order to maintain charge balance. The eluted manganese is electrodeposited on a negative electrode to cause the destruction of an SEI film, and the reactive oxygen released during the charging/discharging process continuously decomposes and consumes the organic solvent of the non-aqueous electrolyte, generating a greater amount of gas by-products. This consumption of non-aqueous electrolyte, structural collapse of overlithiated manganese-rich oxide, and increase in gas by-products significantly deteriorates the service life performance, resistance characteristics, and safety of lithium secondary batteries. In addition, the deterioration worsens in high-temperature and high-voltage conditions.

To prevent these issues described above, the lithium secondary battery according to the present disclosure uses both a first additive and a second additive, which will be described later, as additives to the non-aqueous electrolyte. When the first additive and the second additive are used together, the reactive oxygen generated during the initial activation process and the process of driving the lithium secondary battery is greatly reduced, the structural collapse of overlithiated manganese-rich oxide is prevented, and the consumption of organic solvent is significantly reduced, and accordingly, a lithium secondary battery having excellent high-temperature cycle characteristics, high-temperature storage characteristics, and safety is achievable. This effect is hardly achieved in other lithium transition metal oxides in which reactive oxygen loss is not a great concern.

The overlithiated manganese-rich oxide may include a compound represented by Formula X below.

[Formula X] Li₁₊ₛ[NiₜCoᵤMnᵥM¹_{w}]O_{2+z}

In Formula X above, M¹ is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and 0.05≤s≤1, 0≤t≤0.5, 0≤u≤0.3, 0.5≤v<1.0, 0≤w≤0.2, and 0≤z≤1 are satisfied. Preferably, in Formula X above, 0.05≤s≤1.0, 0.1≤t≤0.5, 0≤u≤0.1, 0.5≤v<1.0, 0≤w≤0.2, and 0≤z≤1 may be satisfied. More preferably, in Formula X above, 0.10≤s≤0.50, 0.1≤t≤0.5, 0≤u≤0.1, 0.6≤v<1.0, 0≤w≤0.1, and 0≤z≤0.50 may be satisfied.

The positive electrode may include a positive electrode current collector and a positive electrode active material layer disposed on at least one surface of the positive electrode current collector. In this case, the positive electrode active material may be included in the positive electrode active material layer.

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminum-cadmium alloy, and may preferably include aluminum.

The positive electrode current collector may generally have a thickness of 3 µm to 500 µm.

The positive electrode current collector may have fine irregularities on a surface thereof to improve bonding strength of a negative electrode active material. For example, the positive electrode current collector may be used in various forms such as a film, a sheet, a foil, a net, a porous body, a foam body, and a non-woven fabric body.

The positive electrode active material layer may be disposed on at least one surface of the positive electrode current collector, specifically, on one surface or both surfaces of the positive electrode current collector.

The positive electrode active material layer may include the positive electrode active material in an amount of 80 wt% to 99 wt%, preferably 92 wt% to 98.5 wt%, in consideration of exhibiting sufficient capacity of the positive electrode active material.

The positive electrode active material layer may further include a binder and/or a conductive material, along with the positive electrode active material.

The binder is a component that supports the binding of an active material and a conductive material and the binding to a current collector, and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and may preferably include polyvinylidene fluoride.

The binder may be included in an amount of 1 wt% to 20 wt%, preferably 1.2 wt% to 10 wt% in the positive electrode active material layer for the purpose of sufficiently securing the binding strength between components such as the positive electrode active material.

The conductive material may be used to support and improve the conductivity of a secondary battery, and is not particularly limited as long as it has conductivity without causing chemical changes in batteries. Specifically, the positive electrode conductive material may include at least one selected the group consisting of graphite such as natural graphite or artificial graphite; carbon black such as acetylene black, KETJENBLACK^{®}, channel black, furnace black, lamp black, or thermal black; conductive fibers such as carbon fibers or metal fibers; conductive tubes such as carbon nanotubes; fluorocarbon; metal powder such as aluminum or nickel powder; conductive whiskers such as zinc oxide or potassium titanate; conductive metal oxides such as titanium oxide; or polyphenylene derivatives, and may preferably include carbon nanotubes for the purpose of improving conductivity.

The conductive material may be included in an amount of 1 wt% to 20 wt%, preferably 1.2 wt% to 10 wt%, in the positive electrode active material layer for the purpose of sufficiently securing electrical conductivity.

The positive electrode active material layer may have a thickness of 30 µm to 400 µm, preferably 40 µm to 110 µm.

A positive electrode slurry including a positive electrode active material and optionally a binder, a conductive material, and a solvent for forming a positive electrode slurry may be applied onto the positive electrode current collector, and then dried and roll pressed to prepare the positive electrode.

The solvent for forming a positive electrode slurry may include an organic solvent such as N-methyl-2-pyrrolidone (NMP). The positive electrode slurry may have a solid content of 40 wt% to 90 wt%, specifically 50 wt% to 80 wt%.

### (2) Negative electrode

The negative electrode may face the positive electrode.

The negative electrode includes a negative electrode active material.

The negative electrode active material is a material enabling intercalation/deintercalation of lithium ions, and may include at least one selected from the group consisting of carbon-based active materials, (semi-)metal-based active materials, and lithium metal, and specifically may include at least one selected from carbon-based active materials and (semi-)metal-based active materials.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

The carbon-based active material may have an average particle diameter (D₅₀) of be 10 µm to 30 µm, preferably 15 µm to 25 µm, in terms of ensuring structural stability upon charging and discharging and reducing side reactions with an electrolyte.

Specifically, the (semi-)metal-based active material may include at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; oxide of at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); and lithium vanadium oxide.

More specifically, the (semi-)metal-based active material may include a silicon-based active material.

The silicon-based active material may include a compound represented by SiOₓ (0≤x<2). SiO₂ does not react with lithium ions and thus is not able to store lithium, and accordingly, x is preferably within the above range, and more preferably, the silicon-based active material may be SiO.

The silicon-based active material may have an average diameter (D₅₀) of 1 µm to 30 µm, preferably 2 µm to 15 µm, in terms of ensuring structural stability upon charging and discharging and reducing side reactions with an electrolyte.

The negative electrode may include a negative electrode current collector and a negative electrode active material layer disposed on at least one surface of the negative electrode current collector. In this case, the negative electrode active material may be included in the negative electrode active material layer.

The negative electrode current collector is not particularly limited as long as it has conductivity without causing chemical changes in batteries. Specifically, copper, stainless steel, aluminum, nickel, titanium, fired carbon, or copper or stainless steel that is surface-treated with carbon, nickel, titanium, silver, or the like may be used as the negative electrode current collector.

The negative electrode current collector may generally have a thickness of 3 µm to 500 µm.

The negative electrode current collector may have fine irregularities formed on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer may be disposed on at least one surface of the negative electrode current collector, specifically, on one surface or both surfaces of the negative electrode current collector.

The negative electrode active material layer may include the negative electrode active material in an amount of 60 wt% to 99 wt%, preferably 75 wt% to 95 wt%.

The negative electrode active material layer may further include a binder and/or a conductive material, along with the negative electrode active material.

The binder is used to improve the performance of batteries through improved adhesion between the negative electrode active material layer and the negative electrode current collector, and may include, for example, at least any one selected from the group consisting of a polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, an ethylene-propylene-diene terpolymer (EPDM), a sulfonated EPDM, styrene butadiene rubber (SBR), fluorine rubber, and a material in which hydrogen thereof is substituted with Li, Na, or Ca, or may also include various copolymers thereof.

The negative electrode material layer may include the binder in an amount of 0.5 wt% to 10 wt%, preferably, 1 wt% to 5 wt%.

The conductive material is not particularly limited as long as it has conductivity without causing chemical changes in batteries, and, for example, a conductive material, such as: graphite such as natural graphite or artificial graphite; carbon black such as acetylene black, KETJENBLACK^{®}, channel black, furnace black, lamp black, or thermal black; conductive fibers such as carbon fibers or metal fibers; conductive tubes such as carbon nanotubes; fluorocarbon; metal powder such as aluminum powder or nickel powder; conductive whiskers such as zinc oxide whiskers or potassium titanate whiskers; conductive metal oxide such as titanium oxide; or polyphenylene derivatives, may be used.

The negative electrode active material layer may include the conductive material in an amount of 0.5 wt% to 10 wt%, preferably, 1 wt% to 5 wt%.

The negative electrode active material layer may have a thickness of 10 µm to 200 µm, preferably 20 µm to 150 µm.

A negative electrode slurry including a negative electrode active material and/or a binder, a conductive material, and a solvent for forming a negative electrode slurry may be applied onto at least one surface of the negative electrode current collector, and the dried and roll pressed to prepare the negative electrode.

The solvent for forming the negative electrode slurry may include at least one selected from the group consisting of distilled water, N-methyl-2-pyrrolidone (NMP), ethanol, methanol, and isopropyl alcohol, preferably distilled water, in terms of facilitating the dispersion of, for example, the negative electrode active material, the binder and/or the conductive material. The negative electrode slurry may have a solid content of 30 wt% to 80 wt%, specifically 40 wt% to 70 wt%.

### (3) Separator

The separator may be interposed between the positive electrode and the negative electrode.

A typically used porous polymer film, for example, a porous polymer film prepared from a polyolefin-based polymer, such as an ethylene homopolymer, a propylene homopolymer, an ethylene/butene copolymer, an ethylene/hexene copolymer, or an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present disclosure is not limited thereto. Furthermore, a coated separator including a ceramic component or a polymer component may be used to secure heat resistance or mechanical strength, and the separator having a single layer or multilayer structure may be used.

### (4) Non-aqueous electrolyte

The non-aqueous electrolyte includes a lithium salt, an organic solvent, and an additive.

### 1) Lithium salt

As a lithium salt used in the present disclosure, various lithium salts commonly used in non-aqueous electrolytes for lithium secondary batteries may be used without limitation. For example, the lithium salt may include Li⁺ as a cation, and may include, as an anion, at least any one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂). Specifically, the lithium salt may include at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), and LiBETI (LiN(SO₂CF₂CF₃)₂).

The nonaqueous electrolyte may include the lithium salt at a concentration of 0.5 M to 5 M, specifically 0.8 M to 4 M, and more specifically 0.8 M to 2.0 M. When the concentration of the lithium salt satisfies the above range, lithium ion yield (Li⁺ transference number) and the dissociation degree of lithium ions are improved, and accordingly, batteries may have improved output characteristics.

### 2) Organic solvent

An organic solvent is a non-aqueous solvent commonly used in lithium secondary batteries, and is not particularly limited as long as its decomposition due to an oxidation reaction or the like may be minimized in the charging/discharging process of secondary batteries.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate lithium salt in an electrolyte due to high permittivity as a highly viscous organic solvent, and specifically may include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and may more specifically include at least one selected from the group consisting of ethylene carbonate (EC) and fluoroethylene carbonate (FEC), and may even more specifically include ethylene carbonate (EC).

The linear carbonate organic solvent is an organic solvent having low viscosity and low permittivity, and may specifically include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and may more specifically include at least one selected from the group consisting of ethylmethyl carbonate (EMC) and diethyl carbonate (DEC), and may more specifically include ethylmethyl carbonate (EMC).

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 5:95 to 40:60, specifically a volume ratio of 10:90 to 25:75. When the mixing ratio of the cyclic carbonate-based organic solvent and the linear carbonate-based organic solvent satisfies the above range, both high permittivity and low viscosity are satisfied, and excellent ionic conductivity may be achieved.

In addition, in order to prepare an electrolyte having high ionic conductivity, the organic solvent may further include at least one ester-based organic solvent selected from the group consisting of a linear ester-based organic solvent and a cyclic ester-based organic solvent, along with at least one carbonate-based organic solvent selected from the group consisting of the cyclic carbonate-based organic solvent and the linear carbonate-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based solvent may specifically include at least one selected from the group consisting of γ-butyrolactone, γ-valerolactone, γ-caprolactone, σ-valerolactone, and ε-caprolactone.

Meanwhile, the organic solvent may be used by adding an organic solvent commonly used in a non-aqueous electrolyte without limitation, when needed. For example, at least one organic solvent selected from an ether-based organic solvent, a glyme-based solvent, and a nitrile-based organic solvent may be further included.

As the ether-based solvent, any one selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), or a mixture of two or more thereof may be used, but is the embodiment is not limited thereto.

The glyme-based solvent, as a solvent having higher permittivity and a lower surface tension than a linear carbonate-based organic solvent, and being less reactive with metal, may include at least one selected from the group consisting of dimethoxyethane (glyme, DME), diethoxyethane, digylme, tri-glyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but is not limited thereto.

### 4) Additive

The non-aqueous electrolyte includes additives. The additives include a first additive and a second additive.

The first additive includes a compound represented by Formula 1 below.

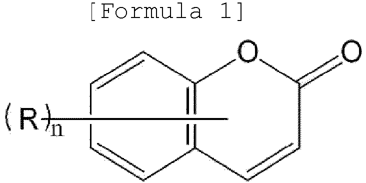

In Formula 1 above, R₁ each independently includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer of 0 to 6.

The compound represented by Formula 1 included in the first additive is a coumarin-based compound and may capture reactive oxygen that is released from the overlithiated manganese-rich oxide upon initial activation. Accordingly, decomposition of an organic solvent and an increase in the generation of gas by-products, which are concerns when the reactive oxygen is generated in the initial activation process may be prevented due to the use of the first additive.

However, the first additive is not effective in removing the reactive oxygen in the initial activation process, and removing the reactive oxygen generated when lithium secondary batteries are charged/discharged or stored. The reactive oxygen generated when the lithium secondary batteries are charged/discharged or stored generates H₂O as a by-product of the reaction with an electrolyte, H₂O decomposes lithium salt to generate HF, and the HF elutes manganese from the overlithiated manganese-rich oxide and release oxygen, resulting in accelerated degradation in life performance and storage performance. In order to prevent the issue, the present disclosure uses a second additive together with the first additive to remove HF generated during charging/discharging, storage, and the like, thereby reducing the chances of reactive oxygen being generated upon the charging/discharging, and storing of lithium secondary batteries. Accordingly, the present disclosure uses the first additive and the second additive together to control the generation of reactive oxygen, which is a particular concern in the overlithiated manganese-rich oxide, thereby improving the service life performance, storage performance, and safety of lithium secondary batteries all together and in particular, significantly improving the service life performance, storage performance, and safety in the event of high-temperature and high-voltage driving.

In Formula 1 above, R₁ may specifically independently be halogen (halogen may be selected from F, Cl, Br, and I, and may specifically be F), a nitrile group, a propargyl group, an ester group, an ether group, or a combination of two or more therefrom. This substituent improves the reducibility of the first additive, and accordingly, the effects of smooth formation of an SEI film and improved lithium ion transport performance may be achieved along with the reactive oxygen capture ability of the first additive.

In Formula 1 above, n may be an integer selected from 0 to 6, specifically, an integer selected from 1 to 6, and more specifically, n may be 1. In Formula 1 above, when n is 2 or greater, R may each be the same as or different from each other.

Specifically, the compound represented by Formula 1 above may include at least one selected from the group consisting of a compound represented by Formula 1-A below and a compound represented by Formula 1-B below.

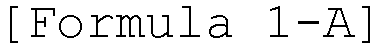

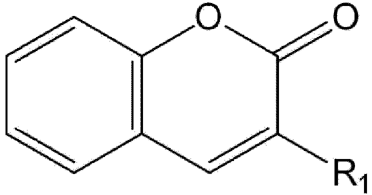

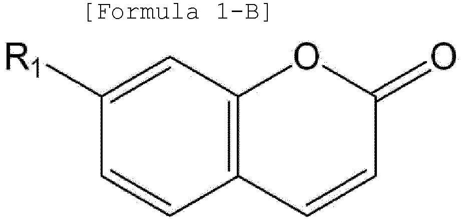

In Formulas 1-A and 1-B above, R₁ is the same as defined in Formula 1 above.

The compounds represented by Formulas 1-A and 1-B above each have a structure in which substituents are present at positions 3 and 7 (in accordance with IUPAC nomenclature) of a ring structure, and in this case, it is preferable in that the compounds are favorable in synthesizing at the position as described above compared to other substitution positions.

Specifically, the compound represented by Formula 1 above may include at least one selected from the group consisting of compounds represented by Formulas 1-1 to 1-9 below. The compound represented by Formula 1 may include at least one of compounds represented by Formula 1-1 to 1-4 below, more specifically at least one selected from the group consisting of compounds represented by Formulas 1-1 and 1-2 below, and more specifically, a compound represented by Formula 1-1 below, in the sense that the compounds are more smoothly reduced to a negative electrode and thus are more suitable for SEI film formation.

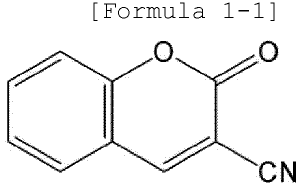

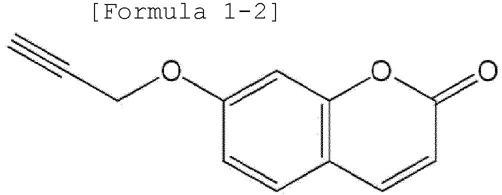

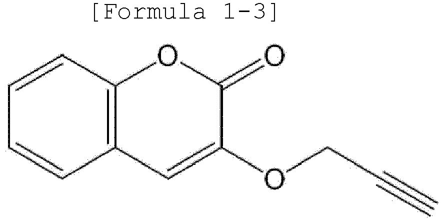

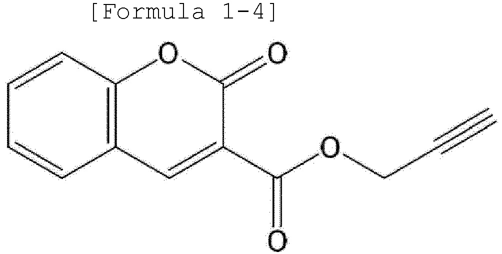

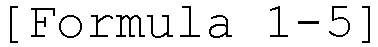

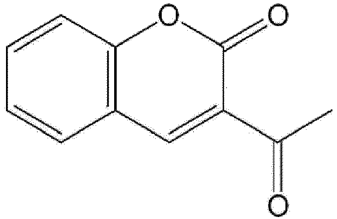

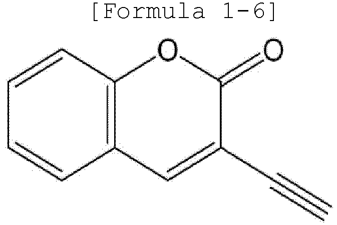

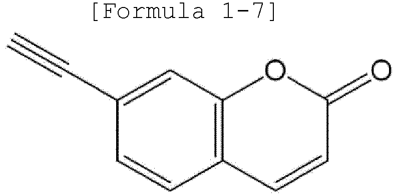

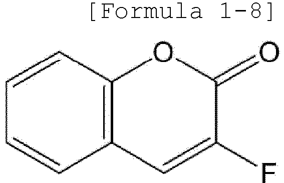

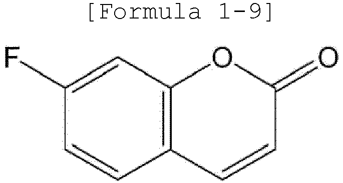

The non-aqueous electrolyte may include the first additive in an amount of 0.01 wt% to 10 wt%, specifically 0.05 wt% to 7 wt%, more specifically 0.1 wt% to 1 wt%, and more specifically 0.3 wt% to 0.7 wt%. When the first additive is used in the amount range described above, the effect of capturing reactive oxygen generated upon initial activation may be sufficiently provided, and the concern over increased resistance when adding an excessive amount may be prevented.

The second additive may include a compound represented by Formula 2 below.

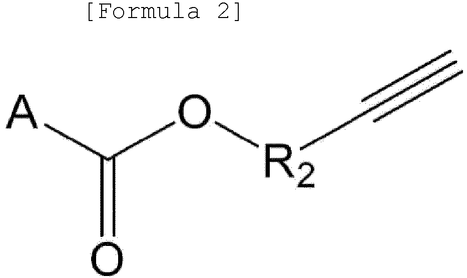

In Formula 2 above, A is a substituted or unsubstituted heteroaryl group having 3 to 5 carbon atoms, and R₂ is an alkylene group having 1 to 3 carbon atoms.

In general, reactive oxygen is generated from overlithiated manganese-rich oxide when lithium secondary batteries are charged/discharged, and stored. This reactive oxygen reacts with an organic solvent of a non-aqueous electrolyte to generate by-products of CO, CO₂, and H₂O, and in particular, H₂O decomposes lithium salt to generate HF, and the HF elutes manganese from the overlithiated manganese-rich oxide and release oxygen, resulting in accelerated degradation in life performance and storage performance.

To prevent the issue, the present disclosure uses the second additive as a non-aqueous electrolyte additive. The second additive is a compound corresponding to a Lewis base capable of capturing HF, which is a Lewis acid, and includes a compound represented by Formula 2, and may prevent the generation of reactive oxygen by HF. Accordingly, the use of the second additive may greatly contribute to improving the high-temperature service life performance, high-temperature storage performance, and safety of a lithium secondary battery containing overlithiated manganese-rich oxide.

However, as the reactive oxygen is hard to be removed directly, the reactive oxygen generated upon initial activation may not be controlled only by using the second additive. When the reactive oxygen generated upon initial activation is not removed, the structural collapse of the overlithiated manganese-rich oxide is accelerated, and the sole use of second additive as a non-aqueous electrolyte additive hardly improves service life performance and storage performance. However, the present disclosure uses the first additive that is effective in removing the reactive oxygen generated upon initial activation together with the second additive, and thus possibly improves the high-temperature service life performance, high-temperature storage performance, and safety of lithium secondary batteries.

In Formula 2 above, A may be a substituted or unsubstituted heteroaryl group having 3 to 5 carbon atoms, specifically a nitrogen-containing substituted or unsubstituted heteroaryl group having 3 to 5 carbon atoms, more specifically a substituent selected from imidazole, pyrazole, pyrrole, pyridine, and pyrimidine.

In Formula 2 above, R₂ may be an alkylene group having 1 to 3 carbon atoms, more specifically, a methylene group (-CH₂-).

Specifically, the compound represented by Formula 2 may include at least one selected from the group consisting of a compound represented by Formula 2-A below, a compound represented by Formula 2-B below, and a compound represented by Formula 2-C, and more specifically may include the compound represented by Formula 2-A below.

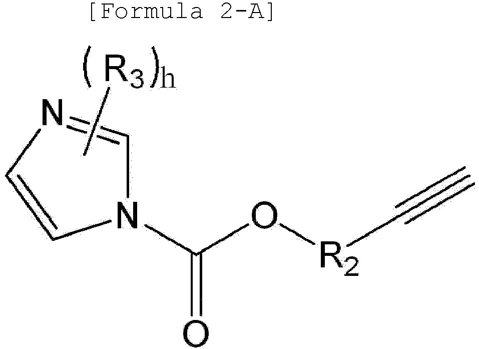

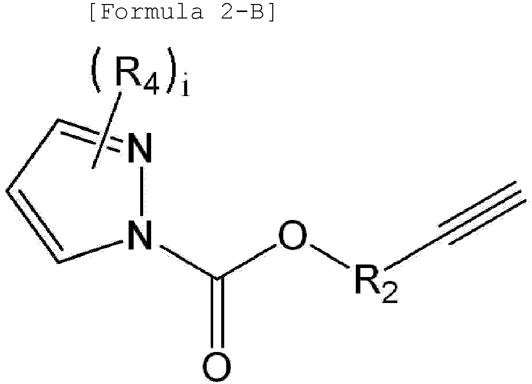

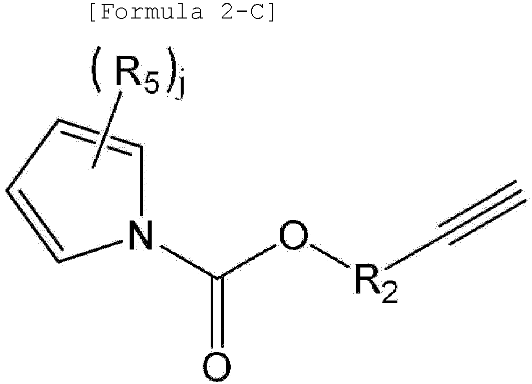

In Formulas 2-A, 2-B, and 2-C above, R₂ is the same as defined in Formula 2 above, and R₃, R₄, and R₅ are independently selected from hydrogen, an alkyl group having 1 to 3 carbon atoms, and -CN, h is an integer of 0 to 3, i is an integer of 0 to 3, and j is an integer of 0 to 4.

Specifically, in Formulas 2-A, 2-B, and 2-C above, h, i, and j may each be 0.

More specifically, the compound represented by Formula 2 above may include a compound represented by Formula 2-1 below.

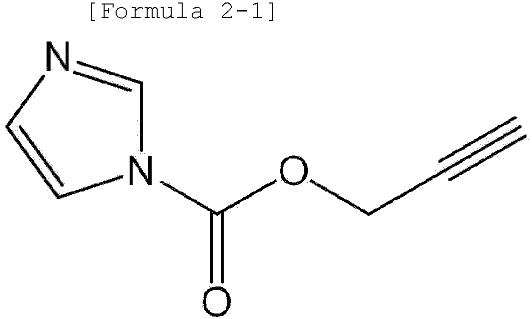

The non-aqueous electrolyte may include the second additive in an amount of 0.01 wt% to 10 wt%, specifically 0.05 wt% to 7 wt%, more specifically 0.1 wt% to 5 wt%, and more specifically 0.3 wt% to 2 wt%. When the amount of the second additive satisfies the above range, it is preferable in terms of sufficiently providing the HF capture effect, and preventing an increase in resistance of a lithium secondary battery due to excessive addition, which causes degradation in service life performance.

A weight ratio of the first additive and the second additive may be 5:95 to 95:5, specifically 10:90 to 92:8, more specifically 30:70 to 70:30, and even more specifically 40:60 to 60:40, and within the above-described weight ratio, the effect resulting from the combined use of the first additive and the second additive is at a good balance, and accordingly, effects from improvements in the high-temperature service life performance, high-temperature storage performance, and safety of lithium secondary batteries may be preferably provided.

The additive may further include an additional additive along with the first additive and the second additive. The additional additive may be included in the non-aqueous electrolyte to prevent negative electrode collapse caused by decomposition of the non-aqueous electrolyte in a high-power setting, improve low-temperature high-rate discharge characteristics, high-temperature stability, and prevent overcharging, and suppressing battery swelling at high temperature.

Specifically, the additional additive may include at least one selected from the group consisting of vinylene carbonate, vinyl ethylene carbonate, fluoroethylene carbonate, propane sultone, propene sultone, succinonitrile, adiponitrile, ethylene sulfate, lithium bis-(oxalate)borate (LiBOB), 3-trimethoxysilyl-propyl-N-aniline (TMSPa), and tris(trimethylsilyl) phosphite (TMSPi), and may specifically be vinylene carbonate.

The non-aqueous electrolyte may include the additional additive in an amount of 0.1 wt% to 15 wt%.

The non-aqueous electrolyte may be manufactured by preparing an organic solvent as described above. Then, a lithium salt as described above is dissolved in the organic solvent to have a concentration of 0.5 M to 5 M, specifically 0.8 M to 4 M, and more specifically 0.8 M to 2.0 M. Next, the first additive and the second additive as described above are added to the organic solvent in which the lithium salt has been dissolved, wherein the first additive is included in an amount of 0.01 wt% to 10 wt%, specifically 0.05 wt% to 7 wt%, more specifically 0.1 wt% to 1 wt%, and more specifically 0.3 wt% to 0.7 wt%, and the second additive is included in an amount of 0.01 wt% to 10 wt%, specifically 0.05 wt% to 7 wt%, more specifically 0.1 wt% to 5 wt%, and more specifically 0.3 wt% to 2 wt%, with respect to a weight of the non-aqueous electrolyte. Additional additives described above may be included in the non-aqueous electrolyte.

The outer shape of the lithium secondary battery of the present disclosure is not particularly limited, and thus a cylindrical shape using a can, a prismatic shape, a pouch shape, or a coin shape, may be used.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (Preparation of non-aqueous electrolyte)

As an organic solvent, a mixture of ethylene carbonate (EC) and ethylmethyl carbonate (EMC) at a volume ratio of 30:70 was used.

LiPF₆ as a lithium salt, a compound represented by Formula 1-1 above as a first additive, and a compound represented by Formula 2-1 above as a second additive were added to the organic solvent to prepare a non-aqueous electrolyte.

The LiPF₆ was included at a molar concentration of 1.2 M in the non-aqueous electrolyte.

The compound represented by Formula 1-1 above was included in an amount of 0.5 wt% in the non-aqueous electrolyte, and the compound represented by Formula 2-1 above was included in an amount of 0.5 wt% in the non-aqueous electrolyte.

### (Preparation of lithium secondary battery)

A positive electrode active material (Li₁.₃₅[Ni_{0.360}Co_{0.005}Mn_{0.635}]O₂, overlithiated manganese-rich oxide), a conductive material (carbon nanotube), and a binder (polyvinylidene fluoride) were added in a weight ratio of 96.0:1.5:2.5 to N-methyl-2-pyrrolidone (NMP) as a solvent to prepare a positive electrode mixture slurry (solid content: 65 wt%). The positive electrode mixture slurry was applied to one surface of a positive electrode current collector (Al thin film) having a thickness of 12 µm, and then dried and roll-pressed to prepare a positive electrode.

A negative electrode active material (a mixture of artificial graphite and natural graphite at a weight ratio of 50.3:49.7), a conductive material (carbon black), and a binder (styrene-butadiene rubber) were added in a weight ratio of 96.7:1.0:2.3 to distilled water as a solvent to prepare a negative electrode mixture slurry (solid content: 50 wt%). The negative electrode mixture slurry was applied to one surface of a negative electrode current collector (Cu thin film) having a thickness of 8 µm, and then dried and roll-pressed to prepare a negative electrode.

A polyethylene porous film separator was interposed between the prepared positive and negative electrodes in a dry room, and then the prepared non-aqueous electrolyte was injected to prepare a secondary battery.

### Example 2

A non-aqueous electrolyte and a lithium secondary battery were prepared in the same manner as in Example 1, except that instead of the compound represented by Formula 1-1 above, the compound represented by Formula 1-2 above was included in an amount of 0.5 wt% as the first additive in the non-aqueous electrolyte.

### Example 3

A non-aqueous electrolyte and a lithium secondary battery were prepared in the same manner as in Example 1, except that instead of the compound represented by Formula 1-1 above, the compound represented by Formula 1-3 above was included in an amount of 0.5 wt% as the first additive in the non-aqueous electrolyte.

### Example 4

A non-aqueous electrolyte and a lithium secondary battery were prepared in the same manner as in Example 1, except that instead of the compound represented by Formula 1-1 above, the compound represented by Formula 1-4 above was included in an amount of 0.5 wt% as the first additive in the non-aqueous electrolyte.

### Example 5

A non-aqueous electrolyte and a lithium secondary battery were prepared in the same manner as in Example 1, except that instead of the compound represented by Formula 1-1 above included in an amount of 0.05 wt% as the first additive in the non-aqueous electrolyte.

### Example 6

A non-aqueous electrolyte and a lithium secondary battery were prepared in the same manner as in Example 1, except that instead of the compound represented by Formula 1-1 above included in an amount of 7wt% as the first additive in the non-aqueous electrolyte.

### Example 7

A non-aqueous electrolyte and a lithium secondary battery were prepared in the same manner as in Example 1, except that instead of the compound represented by Formula 2-1 above included in an amount of 0.05 wt% as the second additive in the non-aqueous electrolyte.

### Example 8

A non-aqueous electrolyte and a lithium secondary battery were prepared in the same manner as in Example 1, except that instead of the compound represented by Formula 2-1 above included in an amount of 7wt% as the second additive in the non-aqueous electrolyte.

### Comparative Example 1

A non-aqueous electrolyte and a lithium secondary battery were prepared in the same manner as in Example 1, except that the first additive and the second additive were not added.

### Comparative Example 2

A non-aqueous electrolyte and a lithium secondary battery were prepared in the same manner as in Example 1, except that the second additive was not added.

### Comparative Example 3

A non-aqueous electrolyte and a lithium secondary battery were prepared in the same manner as in Example 2, except that the second additive was not added.

### Comparative Example 4

A non-aqueous electrolyte and a lithium secondary battery were prepared in the same manner as in Example 1, except that the first additive was not added.

**[Table 1]**

| | Non-aqueous electrolyte | | | | | |
|---|---|---|---|---|---|---|
| | Lithium salt (LiPF₆) | Organic solvent | Additive | | | |
| | Molar concent ration (M, with respect to non-aqueous electro lyte) | | 1st additive | | 2nd additive | |
| | | | Type | Amoun t (wt %, with respe ct to non-aqueo us elect rolyt e) | Type | Amoun t (wt %, with respe ct to non-aqueo us elect rolyt e) |
| Example 1 | 1.2 | EC:EMC (volume ratio 30:70) | Formula 1-1 | 0.5 | Formula 2-1 | 0.5 |
| Example 2 | 1.2 | EC:EMC (volume ratio 30: 70) | Formula 1-2 | 0.5 | Formula 2-1 | 0.5 |
| Example 3 | 1.2 | EC:EMC (volume ratio 30:70) | Formula 1-3 | 0.5 | Formula 2-1 | 0.5 |
| Example 4 | 1.2 | EC:EMC (volume ratio 30:70) | Formula 1-4 | 0.5 | Formula 2-1 | 0.5 |
| Example 5 | 1.2 | EC:EMC (volume ratio 30:70) | Formula 1-1 | 0.05 | Formula 2-1 | 0.5 |
| Example 6 | 1.2 | EC:EMC (volume ratio 30:70) | Formula 1-1 | 7 | Formula 2-1 | 0.5 |
| Example 7 | 1.2 | EC:EMC (volume ratio 30:70) | Formula 1-1 | 0.5 | Formula 2-1 | 0.05 |
| Example 8 | 1.2 | EC:EMC (volume ratio 30:70) | Formula 1-1 | 0.5 | Formula 2-1 | 7 |
| Comparati ve Example 1 | 1.2 | EC:EMC (volume ratio 30:70) | - | - | - | - |
| Comparati ve Example 2 | 1.2 | EC:EMC (volume ratio 30:70) | Formula 1-1 | 0.5 | - | - |
| Comparati ve Example 3 | 1.2 | EC:EMC (volume ratio 30:70) | Formula 1-2 | 0.5 | - | - |
| Comparati ve Example 4 | 1.2 | EC:EMC (volume ratio 30:70) | - | - | Formula 2-1 | 0.5 |

### Experimental Example

### Experimental Example 1: Evaluation of high temperature cycle performance

The lithium secondary batteries of Examples 1 to 8 and Comparative Examples 1 to 4 prepared above were charged up to 4.35 V (1/40 C) in the conditions of CC/CV and 0.33 C at 45 °C using an electrochemical charger and discharger, and 200 cycles of charging and discharging were performed with discharging up to 2.0 V in the conditions of CC and 0.33 C as one cycle.

### (1) Capacity retention

The capacity retention was calculated through the following equation, and the results are shown in Table 2 below.

Capacity retention (%) = {(discharge capacity after 200th cycle)/(discharge capacity after 1st cycle)} × 100

### (2) Resistance increase rate

After one cycle of charging and discharging, the discharge capacity after one cycle was measured using an electrochemical charger and discharger, a state of charge (SOC) was adjusted to 50%, and a pulse of 2.5 C was then applied for 10 seconds to calculate initial resistance through a difference between a voltage before the pulse application and a voltage after the pulse application.

After 200 cycles of charging and discharging, the resistance after 200 cycles was calculated in the same manner as above, the resistance increase rate was calculated using the following equation, and the results are shown in Table 2 below.

Resistance increase rate (%) = (resistance after 200th cycle - initial resistance)/initial resistance × 100

### (3) Amount of gas generation

After 200 cycles of charging and discharging, an amount of gas generated from the lithium secondary battery was measured using GC-FID/TCD, and the results are shown in Table 2 below.

### (4) Amount of transition metal elution

After 200 cycles of charging and discharging, the concentration of all metals eluted in the non-aqueous electrolyte was measured. The amount of metals measured using ICP analysis is shown in Table 2 below.

**[Table 2]**

| | Experimental Example 1 | | | |
|---|---|---|---|---|
| | Capacity retention (%) | Resistance increase rate (%) | Amount of gas generation (µL) | Amount of transition metal elution (ppm) |
| Example 1 | 92.4 | 15.7 | 1,844 | 798 |
| Example 2 | 93.5 | 13.1 | 1,465 | 642 |
| Example 3 | 91.3 | 17.5 | 1,930 | 810 |
| Example 4 | 91.8 | 18.1 | 2,080 | 840 |
| Example 5 | 90.8 | 21.3 | 2,100 | 910 |
| Example 6 | 90.1 | 16.3 | 1,950 | 750 |
| Example 7 | 90.1 | 24.5 | 2,210 | 870 |
| Example 8 | 89.9 | 17.0 | 1,990 | 889 |
| Comparative Example 1 | 82.5 | 45.7 | 3,844 | 2,090 |
| Comparative Example 2 | 87.1 | 38.5 | 2,855 | 1,301 |
| Comparative Example 3 | 87.2 | 36.4 | 2,796 | 1,279 |
| Comparative Example 4 | 88.6 | 32.9 | 2,521 | 1,233 |

Referring to Table 2, it is determined that the lithium secondary batteries of Examples 1 to 8, which are lithium secondary batteries in which a positive electrode containing overlithiated manganese-rich oxide and a non-aqueous electrolyte containing both a first additive and a second additive as additives are combined had higher capacity retention during high-temperature cycle charging/discharging, lower resistance increase rate, lower amount of gas generated than Comparative Examples 1 to 4, and prevented transition metal elution.

### Experimental Example 2: Evaluation of high temperature storage performance

The lithium secondary batteries of Examples 1 to 8 and Comparative Examples 1 to 4 prepared above were charged up to 4.35 V (1/40 C) in the conditions of CC/CV and 0.33 C at 25 °C and discharged up to 2.0 V in the condition of 0.33 C to perform initial charging/discharging, and then charged up to 4.35 V (1/40 C) in the conditions of CC/CV and 0.33 C at 25 °C, and then stored at 60 °C for 8 weeks.

### (1) Capacity retention

After storage for 8 weeks, the lithium secondary batteries were charged up to 4.35 V (1/40 C) in the conditions of CC/CV and 0.33 C at 25 °C, and discharged up to 2.0 V in the condition of 0.33 C to measure the capacity during discharge.

The capacity retention was evaluated according to the following formula, and the results are shown in Table 3 below.

Capacity retention (%)=(discharge capacity after storage for 8 weeks/initial discharge capacity)×100

### (2) Resistance increase rate

After the initial charging/discharging, the capacity was determined at room temperature, the lithium secondary batteries were charged at 50% of SOC with respect to the discharge capacity, discharged for 10 seconds at a current of 2.5 C to measure resistance using the voltage drop difference at this point as an initial resistance, and were stored at 60 °C for 8 weeks to measure resistance in the same manner as a final resistance, thereby calculating resistance increase rate using the following equation. The results thereof are shown in Table 3 below. Resistance increase rate (%) = (final resistance - initial resistance) / (initial resistance) × 100

### (3) Amount of gas generation

After 8 weeks of storage, an amount of gas generated from the lithium secondary battery was measured using GC-FID/TCD, and the results are shown in Table 3 below.

### (4) Amount of transition metal elution

After 8 weeks of storage, the concentration of all metals eluted in the non-aqueous electrolyte was measured. The amount of metals measured using ICP analysis is shown in Table 3 below.

**[Table 3]**

| | Experimental Example 2 | | | |
|---|---|---|---|---|
| | Capacity retention rate (%) | Resistance increase rate (%) | Amount of gas generation (µL) | Amount of transition metal elution (ppm) |
| Example 1 | 91.6 | 12.8 | 1,436 | 440 |
| Example 2 | 90.6 | 15.4 | 1, 807 | 547 |
| Example 3 | 89.1 | 17.3 | 1,950 | 550 |
| Example 4 | 88.3 | 16.8 | 1,935 | 560 |
| Example 5 | 87.3 | 20.1 | 2,008 | 670 |
| Example 6 | 88.9 | 15.5 | 1,905 | 480 |
| Example 7 | 89.1 | 21.3 | 2,100 | 640 |
| Example 8 | 88.7 | 17.4 | 1,890 | 550 |
| Comparative Example 1 | 80.9 | 44.8 | 3,767 | 1,434 |
| Comparative Example 2 | 87.2 | 32.2 | 2,471 | 846 |
| Comparative Example 3 | 86.3 | 34.7 | 2,740 | 877 |
| Comparative Example 4 | 85.4 | 35.7 | 2,798 | 892 |

Referring to Table 3, it is determined that the lithium secondary batteries of Examples 1 to 8, which are lithium secondary batteries in which a positive electrode containing overlithiated manganese-rich oxide and a non-aqueous electrolyte containing both a first additive and a second additive as additives are combined had higher capacity retention during high-temperature storage, lower resistance increase rate, lower amount of gas generated than Examples 1 to 4, and prevented transition metal elution.

### Reference Example

### Reference Example 1

### (1) Preparation of non-aqueous electrolyte

A non-aqueous electrolyte was prepared in the same manner as in Example 1.

### (2) Preparation of a lithium secondary battery

A positive electrode active material (LiNi_{0.85}Co_{0.05}Mn_{0.07}Al_{0.03}O₂), a conductive material (carbon nanotube), and a binder (polyvinylidene fluoride) were added in a weight ratio of 98.0:0.7:1.3 to N-methyl-2-pyrrolidone (NMP) as a solvent to prepare a positive electrode mixture slurry (solid content: 76.5 wt%). The positive electrode mixture slurry was applied to one surface of a positive electrode current collector (Al thin film) having a thickness of 12 µm, and then dried and roll-pressed to prepare a positive electrode.

A negative electrode active material (artificial graphite), a conductive material (carbon black), and a binder (styrene-butadiene rubber) were added in a weight ratio of 96.5:1.5:2.0 to distilled water as a solvent to prepare a negative electrode mixture slurry (solid content: 50 wt%). The negative electrode mixture slurry was applied to one surface of a negative electrode current collector (Cu thin film) having a thickness of 8 µm, and then dried and roll-pressed to prepare a negative electrode.

A polyethylene porous film separator was interposed between the prepared positive and negative electrodes in a dry room, and then the prepared non-aqueous electrolyte was injected to prepare a secondary battery.

### Reference Example 2

A lithium secondary battery was prepared in the same manner as in Reference Example 1, except that the non-aqueous electrolyte prepared in Comparative Example 1 was used instead of the non-aqueous electrolyte prepared in Example 1.

### Reference Experimental Example

The lithium secondary batteries of Reference Examples 1 and 2 prepared above were charged up to 4.2 V (1/40 C) in the conditions of CC/CV and 0.33 C at 25 °C and discharged up to 2.5 V in the condition of 0.33 C to perform initial charging/discharging, and then charged up to 4.2 V (1/40 C) in the conditions of CC/CV and 0.33 C, and then stored at 60 °C for 8 weeks.

### (1) Capacity retention

After storage for 8 weeks, the lithium secondary batteries were charged up to 4.2 V (1/40 C) in the conditions of CC/CV and 0.33 C at 25 °C, and discharged up to 2.5 V in the condition of 0.33 C to measure the capacity during discharge.

The capacity retention was evaluated according to the following formula, and the results are shown in Table 4 below. Capacity retention (%)=(discharge capacity after storage for 8 weeks/initial discharge capacity)×100

### (2) Resistance increase rate

After the initial charging/discharging, the capacity was determined at room temperature, the lithium secondary batteries were charged at 50% of SOC with respect to the discharge capacity, discharged for 10 seconds at a current of 2.5 C to measure resistance using the voltage drop difference at this point as an initial resistance, and were stored at 60 °C for 8 weeks to measure resistance in the same manner as a final resistance, thereby calculating resistance increase rate using the following equation. The results thereof are presented in Table 4 below. Resistance increase rate (%) = (final resistance - initial resistance) / (initial resistance) × 100

### (3) Amount of gas generation

After 8 weeks of storage, an amount of gas generated from the lithium secondary battery was measured using GC-FID/TCD, and the results are shown in Table 4 below.

### (4) Amount of transition metal elution

After 8 weeks of storage, the concentration of all metals eluted in the non-aqueous electrolyte was measured. The amount of metals measured using ICP analysis is shown in Table 4 below.

**[Table 4]**

| | Reference Experimental Example | | | |
|---|---|---|---|---|
| | Capacity retention rate (%) | Resistance increase rate (%) | Amount of gas generation (µL) | Amount of transition metal elution (ppm) |
| Reference Example 1 | 92.8 | 12.1 | 2,930 | 55 |
| Reference Example 2 | 93.6 | 9.3 | 3,010 | 45 |

Referring to Table 4, it is seen that the secondary battery of Reference Example 1, when stored at high temperature, had a lower capacity retention rate, a greater resistance, and a greater amount of transition metal elution than Reference Example 2. Accordingly, it is seen that when the overlithiated manganese-rich oxide is not used as a positive electrode active material, high-temperature storage performance is hardly improved even when the first and second additives are used.

## Claims

1. A lithium secondary battery comprising:
a positive electrode; a negative electrode; a separator disposed between the positive electrode and the negative electrode; and a non-aqueous electrolyte,
wherein the positive electrode comprises an overlithiated manganese-rich oxide containing Mn in an amount of 50 mol% or greater with respect to all metals excluding lithium and having a lithium-to-transition metal molar ratio of greater than 1,
the non-aqueous electrolyte comprises a lithium salt, an organic solvent, and an additive,
the additive comprises a first additive and a second additive,
the first additive comprises a compound represented by Formula 1 below, and
the second additive comprises a compound represented by Formula 2 below: 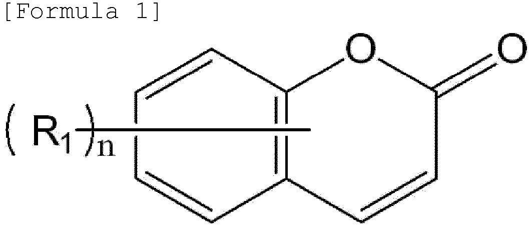 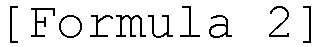 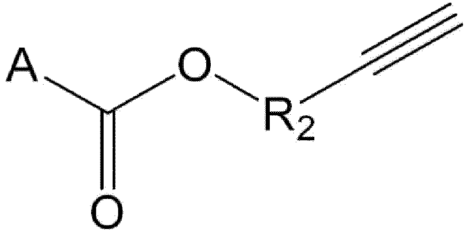
wherein in Formula 1 above, R₁ each independently comprises halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and n is an integer of 0 to 6, and
wherein in Formula 2 above, A is a substituted or unsubstituted heteroaryl group having 3 to 5 carbon atoms, and R₂ is an alkylene group having 1 to 3 carbon atoms.

2. The lithium secondary battery of claim 1, wherein the first additive comprises at least one selected from the group consisting of a compound represented by Formula 1-A below and a compound represented by Formula 1-B below: 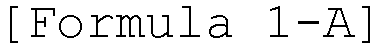 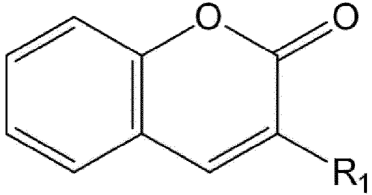 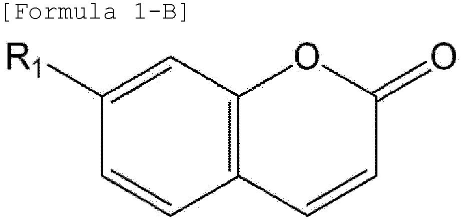 wherein in Formulas 1-A and 1-B above, R₁ is the same as defined in Formula 1 above.

3. The lithium secondary battery of claim 1, wherein the first additive comprises at least one selected from the group consisting of compounds represented by Formulas 1-1 to 1-9 below:

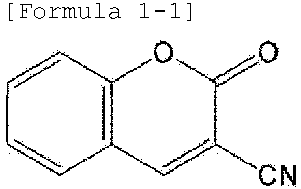

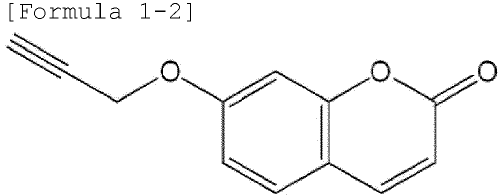

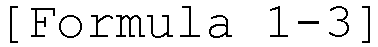

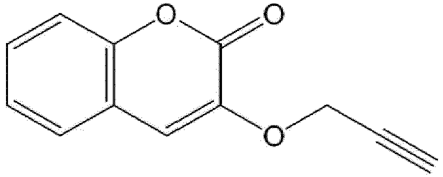

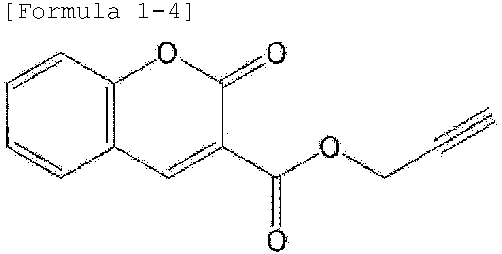

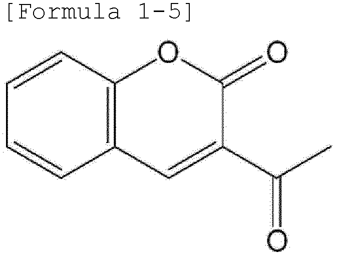

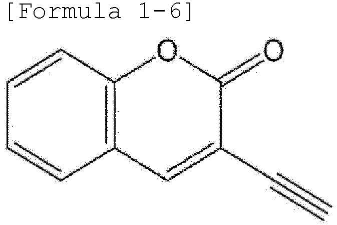

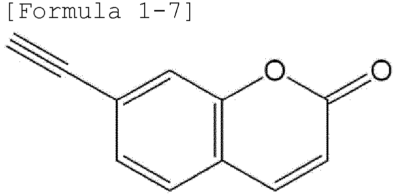

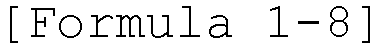

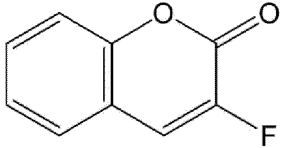

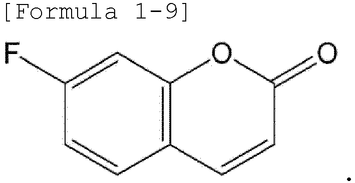

4. The lithium secondary battery of claim 1, wherein the first additive is present in an amount of 0.01 wt% to 10 wt% with respect to a weight of the non-aqueous electrolyte.

5. The lithium secondary battery of claim 1, wherein the second additive comprises at least one selected from the group consisting of a compound represented by Formula 2-A below, a compound represented by Formula 2-B below, and a compound represented by Formula 2-C below: 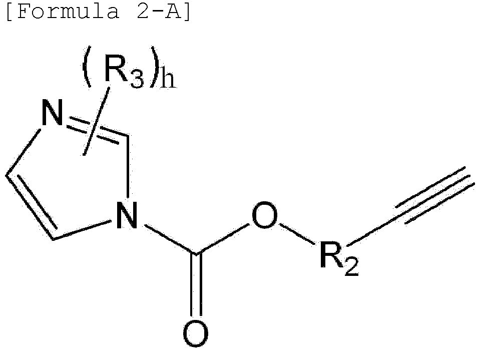 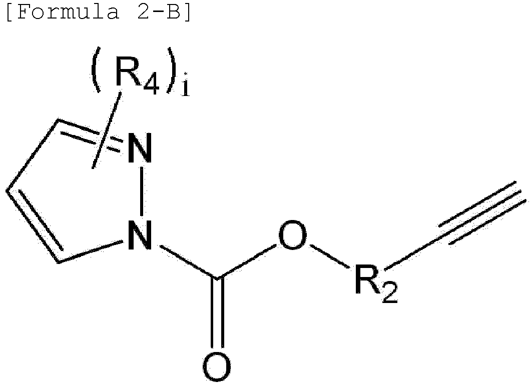 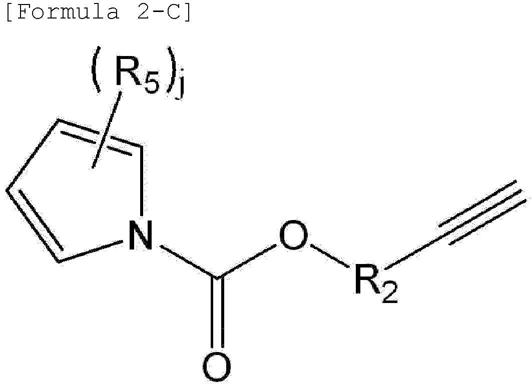
wherein in Formulas 2-A, 2-B, and 2-C above, R₂ is the same as defined in Formula 2 above,
R₃, R₄, and R₅ are each independently selected from hydrogen, an alkyl group having 1 to 3 carbon atoms, and - CN, and
h is an integer of 0 to 3, i is an integer of 0 to 3, and j is an integer of 0 to 4.

6. The lithium secondary battery of claim 1, wherein the second additive comprises a compound represented by Formula 2-1 below:

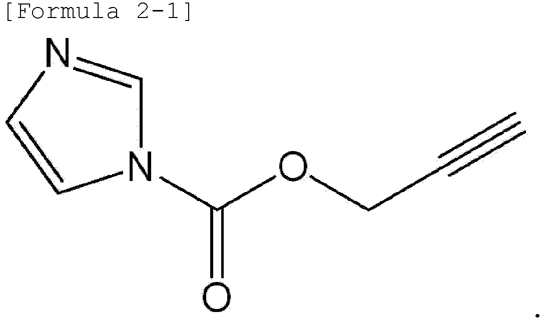

7. The lithium secondary battery of claim 1, wherein the second additive is present in an amount of 0.01 wt% to 10 wt% with respect to a weight of the non-aqueous electrolyte.

8. The lithium secondary battery of claim 1, wherein the first additive and the second additive are in a weight ratio of 10:90 to 90:10.

9. The lithium secondary battery of claim 1, wherein the lithium salt comprises at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).

10. The lithium secondary battery of claim 1, wherein the non-aqueous electrolyte comprises the lithium salt at a molar concentration of 0.5 M to 5.0 M.

11. The lithium secondary battery of claim 1, wherein the organic solvent comprises at least one selected from the group consisting of a cyclic carbonate-based organic solvent, a linear carbonate-based organic solvent, a linear ester-based organic solvent, and a cyclic ester-based organic solvent.

12. The lithium secondary battery of claim 1, wherein the overlithiated manganese-rich oxide is a compound represented by Formula X below:
[Formula X] Li₁₊ₛ[NiₜCoᵤMnᵥM¹_{w}]O_{2+z}
wherein in Formula X above, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, and
0.05≤s≤1, 0≤t≤0.5, 0≤u≤0.3, 0.5≤v<1.0, 0≤w≤0.2, and 0≤z≤1 are satisfied.
